# EUROPEAN PATENT APPLICATION

(11) **EP 1 482 494 A2**
(43) Date of publication of application: **01.12.2004**
(21) Application number: 04009799.0
(22) Date of filing: 26.04.2004
(51) Int. Cl.: G11B 7/26

(54) **Method for producing master for optical information recording media**

(30) Priority: 28.05.2003 JP 2003150631
(71) Applicant: MATSUSHITA ELECTRIC INDUSTRIAL CO., LTD., Kadoma-shi, Osaka 571-8501 (JP)
(72) Inventor: Ito, Eiichi, Nishinomiya-shi, Hyogo-ken (JP); Ohno, Eiji, Hirakata-shi, Osaka-fu (JP)
(74) Representative: Eisenführ, Speiser & Partner

(57) **Abstract**

According to the present invention, a cross-sectional shape of a concave-convex pattern formed on a master for an optical information recording medium can be easily controlled using heat-mode recording. The cross-sectional shape of the concavo-convex patter is controlled by using a master substrate which includes a substrate 101, a thermosensitive material layer 102 whose state is changed by exposure, and at least one recording-auxiliary layer 103 which is disposed in contact with the thermosensitive material layer 102, and selecting a thermal conductivity, an optical constant and a thickness of the recording-auxiliary layer 103 so as to thermally and optically control a condition of the thermosensitive material layer during the exposure.

## Description

### BACKGROUND OF THE INVENTION

The present invention relates to a method for producing a master for an optical recording medium, wherein heat-mode recording is employed for forming a concavo-convex pattern on a master substrate.

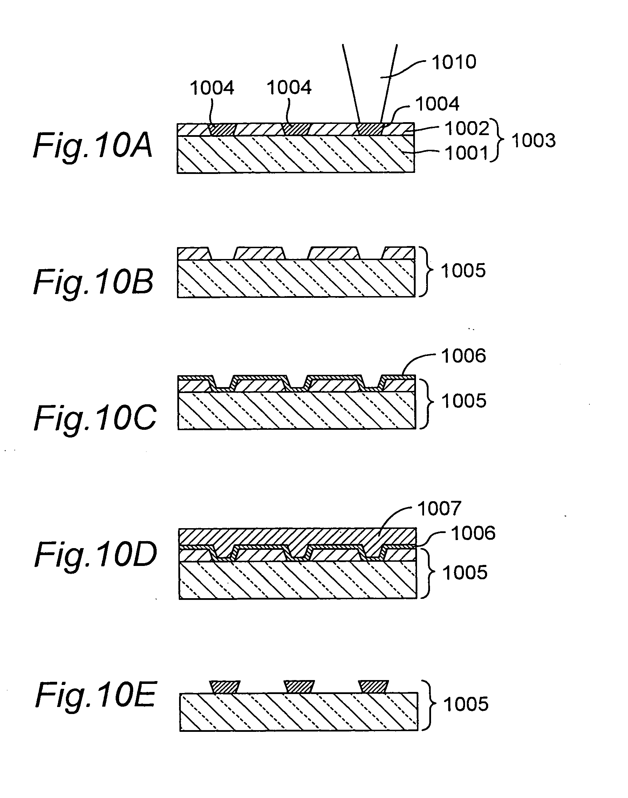

A conventional method for producing a master for an optical recording medium and a conventional method for producing a stamper are described with reference to Fig. 10. Firstly, a master substrate 1003 is fabricated by forming a photoresist 1002 in the form of thin film on a substrate 1001. The master substrate 1003 is subjected to exposure with a laser or an electron beam (a recording light) 1010 so that a desired pattern including a guide groove and information pits is formed as a latent image 1004 (Fig. 10A). The master substrate after the exposure is etched, and thereby a master 1005 is obtained wherein the latent image 1004 of the desired pattern is formed into convexities or concavities (Fig. 10B). In a production process of a master for a DVD or the next-generation optical information recording medium, exposure with an ultraviolet laser and a wet etching with an alkaline solution are generally employed. The formation of latent image using a photochemical reaction which is caused by photoresist exposure is called as "photon-mode recording." A stamper is obtained by forming a conductive film 1006 on the master 1005 (Fig. 10C), forming a metal layer 1007 on the conductive film 1006 by plating (Fig. 10D), and peeling the metal layer 1007 followed by punching process and so on. A disc substrate of an optical information recording medium is produced by injection molding with the stamper. Figs. 10A to 10D illustrate a method for producing a master using a positive photoresist. When a negative photoresist is used, a master can be produced according to the same method as the method wherein the positive photoresist is used, except that convexities and concavities on the master are reversed (Fig. 10E).

Instead of the photoresist, there is proposed a method for producing a master wherein a layer of a thermosensitive material is formed on the substrate 1001 and heat-mode recording is carried out on the thermosensitive material layer (see Japanese Patent Kokai (Raid-Open) Publication No. 10-97738-A(1998)). "Heat-mode recording" means a method for recording a desired pattern with use of state change of a material caused by temperature change due to exposure. The term "state change of a material" means change of physical and/or chemical property of the material. In the master production process, the heat-mode recording is carried out so as to form portions which are to become concavities by an etching (or convexities after the etching). When using the heat-mode recording with light having a wavelength, it gives a pattern wherein outlines of the concavities and convexities are clearer compared with those given by the photon-mode recording with the light having the same wavelength. This is because the state change of the thermosensitive material due to exposure occurs when the material reaches a predetermined temperature, and the state change does not occur at a portion which does not reach the predetermined temperature even if the temperature is raised at the portion. Therefore, the heat-mode recording enables a finer pattern to be formed. The heat-mode recording has been already used in a product such as an overwritable optical information recording medium. In the overwritable optical information recording medium, information is recorded (that is, pits are formed) using the change of optical constant in a recording layer which change is caused by the temperature change.

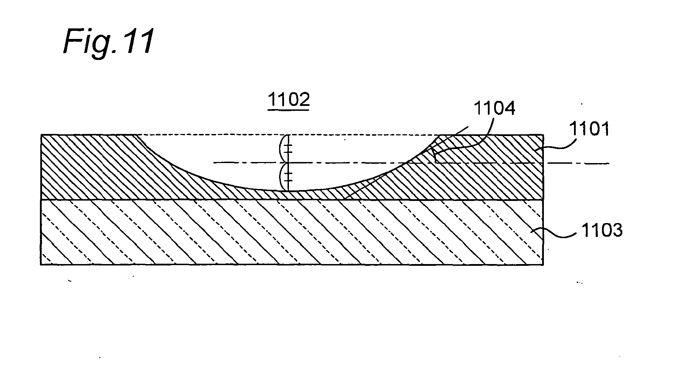

As described above, the heat-mode recording makes it possible to form a concavo-convex pattern whose outline on the master surface is clearer. However, as described below with reference to Fig. 11, the concavity formed with use of the heat-mode recording has a cross-sectional shape whose side wall gently inclines, that is, an inclination angle 1104 tends to be smaller. When a stamper is produced using the master where the concavities (specifically a guide groove and signal pits) having a small inclination angle are formed, and then an optical information recording medium is produced using the stamper, there is a disadvantage that amplitudes of signal from the guide groove and signal pits are small.

Further, the concavo-convex pattern formed on the master for an optical information recording medium is transferred (or embossed) to the metal stamper, and then the pattern is transferred to the substrate by molding a resin with the stamper, resulting in the guide groove and signal pits on the optical information recording medium. Therefore, in order to form a desired guide groove and so on, it is important to form concavities having an inclination angle 1104 suitable for the transferring process that is used in a production process of the optical information recording medium. But, it is difficult to control the inclination angle freely in the photon-mode recording as well as the heat-mode recording.

In the light of the above-described situation, the present invention has been developed, and the object of the present invention is to form, with use of the heat-mode recording, concavities or convexities whose inclination angle is larger, and to control the inclination angle as desired.

### SUMMARY OF THE INVENTION

Referring to Fig. 11, the following explains the knowledge, which the inventors of the present invention has obtained, as to the reason why an inclination angle of concavo-convex pattern in a master for an optical recording medium is small when the master is produced using the heat-mode recording. In the case where the heat-mode recording is applied to the production of a master for optical information recording medium, one of the principal surfaces of a thermosensitive material layer 1101 contacts air 1102, and the other surface contacts a substrate 1103. The thermosensitive material layer 1101 is formed from a thermosensitive material. The degree of temperature rising due to the exposure on the side of air is different from that on the side of the substrate, since the thermal conductivity of air is different from that of the solid substrate. That is, in the example shown in Fig. 11, more heat accumulates around the surface of the thermosensitive material layer 1101, and thereby the portion where the state change occurs due to the temperature rising is unevenly distributed and localized near the surface of the thermosensitive material layer 1101. As a result, the variation in the ratio of the thickness of the thermosensitive material layer after the etching to the thickness of the thermosensitive material layer before the etching along the direction of plane within a concavity (that is, inclination of boundary between the state-changed portion and a state-unchanged portion) becomes small, which results in a smaller inclination angle 1104 of concavity. Here, the "inclination angle of concavity" means an angle between a plane parallel to the principal surface of the master and a tangential line to the side wall of the concavity at the half of the depth of the concavity, which angle is determined on the side of the portion which remains after the etching. Further, the degree of temperature rising of the thermosensitive material layer is effected by the ability of the thermosensitive material to absorb light (that is, the absorbance of the thermosensitive material layer) at a wavelength with which the exposure is carried out. The absorbance is affected by the materials which contact with both principal surfaces of the thermosensitive material layer. The inventors of the present invention has completed the present invention based on the idea that concavities and convexities of desired cross-sectional shape can be obtained by adjusting the thermal conductivity and/or the optical constant of the materials (including air) which contact with both surfaces of the thermosensitive material layer.

The present invention provides a first method for producing a master for an optical information recording medium, which includes exposing a master substrate including a substrate, a thermosensitive material layer formed from a material whose state is changed by temperature rising due to the exposure, and a recording-auxiliary layer formed from a material different from that of the thermosensitive material layer to form a state-changed portion and a state-unchanged portion, and carrying out a first etching on the condition that etching rates of the state-changed portion and the state-unchanged portion are different from each other. The method of the present invention is characterized by using the master substrate which is provided with the recording-auxiliary layer which gives thermal and/or optical effect on the thermosensitive material layer. This characteristic makes it possible to form a concavo-convex pattern having a steep cross-sectional shape, in the case of forming the pattern by the heat-mode recording. Further, the cross-sectional shape of the concavo-convex pattern can be easily controlled by appropriately selecting the material and the thickness of the recording-auxiliary layer. The recording-auxiliary layer is preferably formed in contact with the principal surface of the thermosensitive material layer.

As described above, the thermosensitive material is a material whose state is changed by the temperature change (specifically, temperature rising) due to exposure. Herein, "state of a material is changed" means that chemical property and/or physical property of the thermosensitive material is changed. The term "state-changed portion" is, for example, a phase-changed portion or a thermally crosslinked portion. In this specification, the term "exposure" is used in the sense that it includes not only light irradiation, but also other beam irradiation such as electron beam irradiation. Further, in this specification, the term "cross-sectional shape" refers to the shape of cross section in the thickness direction unless expressly stated to be a shape of cross section in another direction, and the term "surface" refers to a broad surface vertical to the thickness direction (that is, the principal surface). Furthermore, in this specification, a master for an optical information recording medium may be merely referred to as a "master", and "recording" may mean forming the state-changed portion within the thermosensitive material layer as desired by exposure.

The present invention also provides a second method for producing a master according to the first method, which is characterized in that, in the master substrate, the recording-auxiliary layer is disposed between the thermosensitive material layer and the substrate. In that case, the thermosensitive material layer can be controlled thermally and/or optically from the substrate side upon recording.

The present invention provides a third method for producing a master according to the first or the second method, which is characterized in that, in the master substrate, thermal conductivity of a material of the recording-auxiliary layer is different from that of a material of the substrate. By changing the material and the thickness of the recording-auxiliary layer in consideration of the thermal conductivity of the material of the substrate, the heat releasability of the thermosensitive material layer from the substrate side can be easily controlled, whereby it is possible to control the cross-sectional shape of the concavo-convex pattern formed on the master substrate and the recording sensitivity.

The present invention provides a fourth method for producing a master according to the second or the third method, which is characterized in that, in the master substrate, the recording-auxiliary layer is formed so as to increase the absorbance of the thermosensitive material layer at a wavelength of light that is employed for exposure. Specifically, such a master substrate is formed by appropriately selecting the optical constant (n+iκ wherein n is a refractive index and κ is an extinction coefficient) of the recording-auxiliary layer depending on the optical constants of the substrate and the thermosensitive material layer. This master substrate enhances the recording sensitivity of the thermosensitive material layer upon recording. Further, by using this master substrate, it is possible to control a distribution of the absorbed recording-light amount in the thickness direction of the thermosensitive material layer, whereby the cross-sectional shape of the concavo-convex pattern can be controlled.

The present invention provides a fifth method for producing a master according to the first method, which is characterized in that, in the master substrate, the thermosensitive material layer is disposed between the recording-auxiliary layer and the substrate. The master substrate used in the fifth method has a construction wherein the recording-auxiliary layer is disposed on the upper surface of the thermosensitive material layer, provided that the surface of the thermosensitive material layer which surface is near to the substrate is defined as the lower surface. This master substrate makes it possible to control the thermosensitive material layer thermally and/or optically from the side of the exposed surface of the master substrate upon recording.

The present invention provides a sixth method for producing a master according to the fifth method, which is characterized in that the recording-auxiliary layer of the master substrate is removed during the first etching. In this method, materials for the recording-auxiliary layer and the thermosensitive material layer as well as an etchant are selected so that the first etching can be carried out under such a condition. The sixth method eliminates the necessity of removing the recording-auxiliary layer before the first etching and reduces the number of steps in the master production process.

The present invention provides a seventh method for producing a master according to the fifth or the sixth method, which is characterized in that, in the master substrate, the thermal conductivity of a material of the recording-auxiliary layer is different from that of a medium which contacts the surface of the master substrate which surface is to be exposed. This seventh method is a preferable embodiment when employing the master substrate having the recording-auxiliary layer above the thermosensitive material layer. By changing the material and the thickness of the recording-auxiliary layer based on the thermal conductivity of the medium surrounding the master substrate, the heat releasability of the thermosensitive material layer from the side of the exposed surface of the master substrate can be easily controlled, whereby the cross-sectional shape of the concavo-convex pattern and the recording sensitivity can be controlled.

The present invention provides a eighth method for producing a master according to the first method, which is characterized in that, in the master substrate, the recording-auxiliary layer of the master substrate consists of a first recording-auxiliary layer and a second recording-auxiliary layer, and the first recording-auxiliary layer is disposed between the thermosensitive material layer and the substrate, and the thermosensitive material layer is disposed between the first and the second recording-auxiliary layers. By using the master substrate with the thermosensitive material layer sandwiched between the two recording-auxiliary layers, the thermosensitive material layer can be controlled thermally and/or optically from the side of the substrate as well as the side of the exposed surface of the substrate.

The present invention provides a ninth method for producing a master according to the eighth method, which is characterized in that, in the master substrate, the thermal conductivity of a material of the first recording-auxiliary layer is different from that of a material of the substrate. The effect given by the ninth method is the same as that given by the third method.

The present invention provides a tenth method for producing a master according to the eighth or the ninth method, which is characterized in that, in the master substrate, thermal conductivity of a material of the second recording-auxiliary layer is different from that of a material of a medium which contacts the exposed surface of the master substrate. The effect given by the tenth method is the same as that given by the seventh method.

The present invention provides a eleventh method for producing a master according to any one of the eight to the tenth methods, which is characterized in that, in the master substrate, the recording-auxiliary layer enhances an absorbance of the thermosensitive material layer at a wavelength of light that is employed for the exposure. The effect given by the eleventh method is the same as that given by the fifth method.

The present invention provides a twelfth method for producing a master according to any one of the first to eleventh methods, which is characterized in that, in the master substrate, a metal reflective layer is disposed at a position which is closer to the substrate than both of the thermosensitive material layer and the recording-auxiliary layer. In the master substrate used in the twelfth method, the metal reflective layer exists at a position lower than both of the thermosensitive material layer and the recording-auxiliary layer, provided that a position which is further from the surface that is subjected to exposure is defined as a lower position. The metal reflective layer enhances the absorbance of the thermosensitive material layer upon recording.

The present invention provides a thirteenth method for producing a master according to the twelfth method, which is characterized in that, in the master substrate, the recording-auxiliary layer is disposed between the metal reflective layer and thermosensitive material layer, and thermal conductivity of a material of the recording-auxiliary layer is lower than that of a material of the metal reflective layer. The metal reflective layer generally has high thermal conductivity. Therefore, when the metal reflective layer contacts the thermosensitive material layer, the heat releasability of the thermosensitive material layer is increased. In the thirteenth method, the recording-auxiliary layer of low thermal conductivity can suppress the increase of the heat releasability of the thermosensitive material layer which increase is due to the metal reflective layer.

The present invention provides a fourteenth method for producing a master according to any one of the first, second, third, fourth, eighth, ninth, tenth, eleventh, twelfth, and thirteenth methods, which is characterized in that the first etching is carried out under a condition that the etching rate of the recording-auxiliary layer is lower than the higher of the etching rates of the state-changed portion and the state-unchanged portion of the thermosensitive material layer. The fourteenth method is carried out when using the master substrate having the recording-auxiliary layer disposed between the thermosensitive material layer and the substrate. In the fourteenth method, since it is possible to suppress roughening of the surface of the recording-auxiliary layer during the first etching, a bottom surface of the concavoconvexity pattern can be more flat.

The present invention provides a fifteenth method for producing a master according to any one of the first, second, third, fourth, eighth, ninth, tenth, eleventh, twelfth, thirteenth and fourteenth methods, which is characterized in that a second etching is carried out using the thermosensitive material layer as a mask after the thermosensitive material layer is selectively removed by the first etching, and a third etching for removing the thermosensitive material layer is carried out after the second etching. In the case where the concavo-convex pattern is formed by etching the thermosensitive material layer, the concavo-convex pattern may not be excellent since the surface of the thermosensitive material layer is roughened. According to the fifteenth method, the concavities and convexities are formed by the second etching and a smooth surface of the recording-auxiliary layer is bared by the third etching, whereby an excellent concavo-convex pattern can be formed.

The present invention provides a sixteenth method for producing a master according to the fifteenth method, which is characterized in that the master substrate has a construction wherein the recording-auxiliary layer is disposed between the thermosensitive material layer and the substrate, and the second etching is carried out under a condition that an etching selective ratio of the recording-auxiliary layer to the thermosensitive material layer is larger than d1/d2 wherein d1 is a depth of the recording auxiliary layer which depth is to be obtained by the second etching and d2 is a mean thickness of the thermosensitive material layer before the second etching. Herein, "depth d1" means a depth at the deepest point of a concavity after the etching. The term "mean thickness of a thermosensitive material layer before the second etching" which is represented by "d2" refers to the mean thickness of portions where concavities do not exist when the state-changed portions become the concavities by the first etching, and "d2" refers to the mean height of the convexities when the state-changed portions become convexities by the first etching. The etching selective ratio corresponds to a ratio of an etching rate of a material to another etching rate of another material. In the sixteenth method, rₐᵤₓ/rₕₑₐₜ>d1/d2 should be satisfied, wherein rₐᵤₓ is an etching rate of the recording-auxiliary layer during the second etching, and rₕₑₐₜ is an etching rate of the thermosensitive material layer during the second etching. According to the sixteenth method, an excellent concavo-convex pattern can be formed by the second etching without disappearance of the thermosensitive material layer which functions as the etching mask during the second etching. The sixteenth method can be applied to any master substrate having the recording-auxiliary layer between the thermosensitive material layer and the substrate. Therefore, the sixteenth method can be applied to the above-described master substrate wherein the thermosensitive material layer is disposed between the first recording-auxiliary layer and the second recording-auxiliary layer.

The present invention provides a seventeenth method for producing a master according to the fifteenth or the sixteenth method, which is characterized in that the second etching is carried out under a condition that the etching selective ratio of the recording-auxiliary layer to a layer which contacts the recording-auxiliary layer and is disposed at a position closer to the substrate, is larger than 1. "The layer which contacts the recording-auxiliary layer and is disposed at a position closer to the substrate" is a layer which contacts the lower surface of the recording-auxiliary layer provided that the direction from the exposed surface of the recording-auxiliary layer toward the substrate is defined as a downward direction. Such a layer is, for example, the above-mentioned metal reflective layer. In the seventeenth method, it is possible to suppress roughening of the surface of the layer disposed at a position lower than the recording-auxiliary layer, during the second etching. Therefore, when the surface of the lower layer is bared during the second etching, an excellent concavo-convex pattern is formed with the bottom surfaces of the concavities flatter.

The present invention provides a eighteenth method for producing a master according to any one of the first to the seventeenth methods, which is characterized in that, in the master substrate, a light permeable layer whose material has a refractive index in a range of 1.35 to 1.65 at a wavelength of light which is employed for the exposure, is disposed at a position further from the substrate than both of the thermosensitive material layer and the recording-auxiliary layer, and the light permeable layer is removed after the exposure. In the eighteenth method, the light permeable layer of the material having a particular refractive index corresponds to a protective layer of a general optical disc. Therefore, the light permeable layer allows light to be focused on the master substrate using an objective lens for a household apparatus which is mass produced. This makes it possible to record the master substrate using an inexpensive objective lens for household apparatus

The present invention provides a nineteenth method for producing a master according to any one of the first to the eighteenth methods, which is characterized in that, in the master substrate, the thermosensitive material layer includes either or both of Te and Sb, at least one element which is selected from the group consisting of Au, Pt, Ag and Cu, and oxygen (O), and the recording-auxiliary layer includes either or both of ZnS and SiO₂, and the exposure is carried out with a laser beam and the first etching is an alkali etching. In the nineteenth method, the exposure and the first etching can be carried by means of conventional apparatuses. That is, by using the master substrate which has the thermosensitive material layer and the recording-auxiliary layer which are made from these materials respectively, a master whose recording density is five times the recording density of a master produced through photon-mode recording can be produced by means of an apparatus which is the same as that used for producing a DVD having a recording capacity of 4.7 GB per layer and a diameter of 12 cm.

The present invention provides a twentieth method for producing a master according to any one of the first to the nineteenth methods, which is characterized in that, in the master substrate, the recording-auxiliary layer is formed from a resin material. The material has thermal conductivity lower than that of an inorganic material. Therefore, for example, when the metal reflective layer contacts the recording-auxiliary layer, the resin material is preferably used for forming the recording-auxiliary layer of low thermal conductivity. Further, a material of desired properties can be easily obtained by mixing two or more resin materials which are soluble in the same solvent.

The present invention provides a twenty-first method for producing a master according to any one of the first to the twentieth methods, which is characterized in that, in the master substrate, the recording-auxiliary layer is formed from an inorganic material by a vacuum deposition method or a sputtering method. By carrying out the vacuum deposition method or the sputtering method using a target of a mixture of two or more materials or a plurality of targets at the same time, the recording-auxiliary layer formed from a mixture of inorganic materials can be easily obtained. This enables the recording-auxiliary layer to have a desired property.

The present invention provides a twenty-second method for producing a master according to any one of the first to the twenty-first methods, which is characterized in that a concavity or a convexity having an inclination angle in a range of 50° to 73° is formed by the first etching. The inclination angle of a concavity means an angle between a plane parallel to the principal surface of the master and a tangential line to the side wall of the concavity at the half of the depth of the concavity, which angle is determined on the side of a portion which remains after the etching. The inclination angle of a convexity means an angle between a plane parallel to the principal surface of the master and a tangential line to the side wall of the convexity at the half of the height of the convexity, which angle is determined on the side of a portion which remains after the etching. This method enables the concavo-convex pattern having a high inclination angle which has not been achieved by the prior art heat-mode recording, to be formed on the master by appropriately selecting the material for the recording-auxiliary layer of the master substrate. This allows a high-resolution master recording.

The present invention also provides a stamper which is produced using a master which is produced according to the method of the present invention. The stamper is produced by forming a conductive film and a metal layer on the surface of the master according to a conventional method which is described in connection with the prior art.

The present invention also provides an optical information recording medium which is produced using a master which is produced according to the method of the present invention, or using a stamper which is produced with use of the master. The optical information recording medium is, for example, a DVD or the next-generation optical disc on which information is recorded with a laser beam of a shorter wavelength. The optical information recording medium may be a read-only medium, or an overwritable medium.

The method for producing a master of the present invention makes it possible to easily control the cross-sectional shape of the concavo-convex pattern which is formed on the master. Further, by selecting the material and the construction of the recording-auxiliary layer according to the method of the present invention, it is possible to improve the recording sensitivity of the master substrate, and to select the thermosensitive material for the heat-mode recording from a wider range, and to carry out the master recording using an inexpensive objective lens.

### BRIEF DESCRIPTION OF THE DRAWINGS

A more complete appreciation of the invention and many of the attendant advantages thereof will become readily apparent with reference to the following detailed description, particularly when considered in conjunction with the accompanying drawings, in which:
Figs. 1A and 1I show cross sectional views of examples of master substrates which are used in a method for producing a master of the present invention, and Figs. 1B to 1H show cross sectional views of master substrates after exposure;
Fig. 2 schematically shows an apparatus for recording on a master substrate and a method for recording on a master substrate;
Figs. 3A and 3B show cross-sectional views of master substrates before a first etching, and Figs. 3C to 3F show cross-sectional views of masters obtained after the first etching;
Figs. 4A and 4B show cross-sectional views of master substrates before a first etching, and Figs. 4C and 4D show cross-sectional view of masters obtained after the first etching;
Fig. 5A shows a cross-sectional view of another example of a master substrate which is used in a method for producing a master of the present invention, and Figs. 5B to 5H show cross-sectional views of master substrates after exposure;
Figs. 6A and 6B show cross-sectional views of still another examples of master substrates which are used in a method for producing a master of the present invention;
Figs. 7A and 7B show cross-sectional views of master substrates before a second etching that is carried out in accordance with a method of the present invention, and Figs. 7C and 7D show cross-sectional views after the second etching;
Fig. 8A shows still another example of a master substrate which is used in a method for producing a master of the present, and Figs. 8B to 8D schematically show methods for producing the master substrate shown in Fig. 8A.
Fig. 9 shows a cross-sectional view of a typical optical information recording medium;
Figs. 10A to 10D schematically show a conventional method for producing a positive type master and a conventional method for producing a stamper, and Fig. 10E shows a cross-sectional view of a negative type master;
Fig. 11 shows a cross-sectional view of a conventional master which is produced with heat-mode recording.

### DETAILED DESCRIPTION OF THE PREFERRED EMBODIMENTS

Embodiments of the present invention are described with reference to the drawings. In the following, the terms "lower", "under", and "beneath" used in relation to a layer refers to a direction or a position which is closer to a substrate, when a master substrate including the substrate is placed so that the substrate is positioned at downside.

### (Embodiment 1)

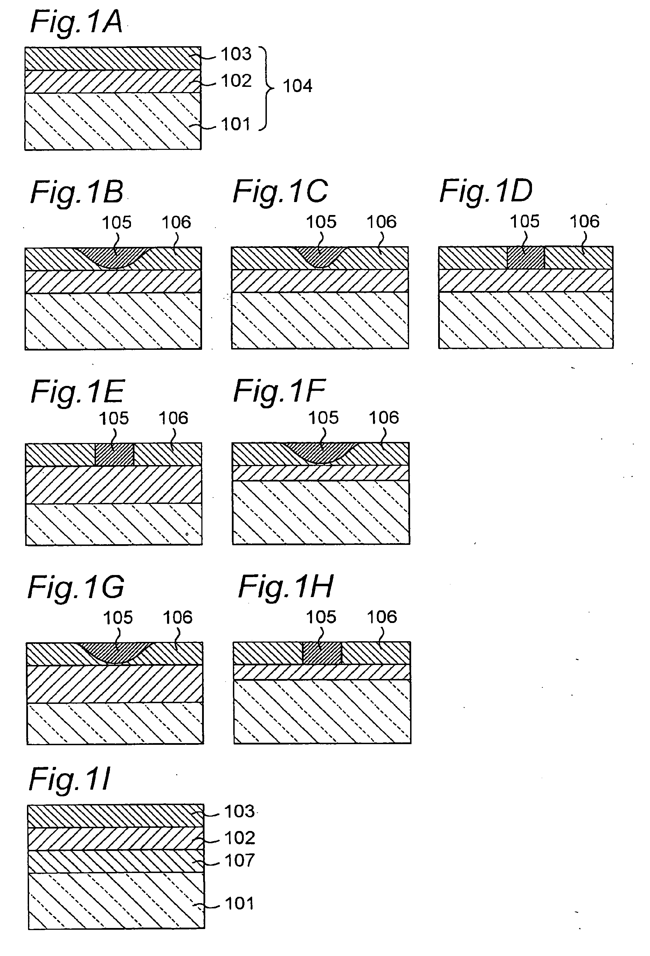

As Embodiment 1, a method for producing a master which employs a master substrate having a recording-auxiliary layer sandwiched between a thermosensitive material layer and a substrate, is described with reference to Figs. 1 to 4. Fig. 1A shows a cross-sectional view of an exemplary master substrate. In the master substrate 104 shown in Fig. 1A, a substrate 101 is made from glass, silicon, or resin. A recording-auxiliary layer 102 is formed on the substrate 101 by, for example, a sputtering method or a spin coat method. The recording-auxiliary layer 102 is formed from, for example, a dielectric material or a resin. A thermosensitive material layer 103 is formed on the recording-auxiliary layer 102 so that the layer 103 contacts the layer 102. The thermosensitive material layer 103 is made from a material whose state is changed by temperature rising due to exposure. The thermosensitive material layer 103 is formed by, for example, a sputtering method or a spin coat method. The illustrated master substrate is a minimum construction which is necessary to carry out the production method of Embodiment 1. Therefore, the master substrate may include another element, for example, an interface layer which is disposed between the recording-auxiliary layer and the thermosensitive material layer (for example, a thin film having a thickness of at most 1 nm) or a reflective layer, as long as the recording-auxiliary layer is positioned lower than the thermosensitive material layer and a cross-sectional shape of a state-changed portion of the thermosensitive material layer is controlled by the recording-auxiliary layer. One example of a master substrate 104 which includes a metal reflective layer 107 is shown in Fig. 1I.

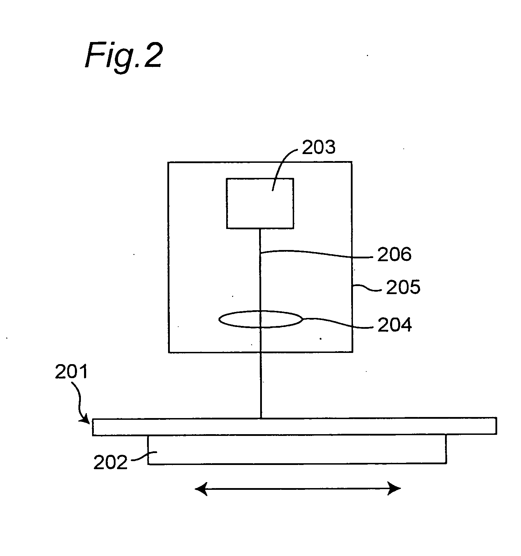

Each of Figs. 1B to 1H shows a master substrate wherein a state-changed portion 105 is formed by the temperature rising caused by irradiating the master substrate with light. In these figures, a state-unchanged portion is denoted by the numeral 106. Here, a method for recording on the master substrate 104 is described with reference to Fig. 2. A master substrate 201 is placed on a turntable 202 and rotated with the turntable 202. A recording light 206 from a light source 203 is focused on a surface of the master substrate 201 by means of a lens 204. The recording light 206 may be modulated and/or deflected within the light source 203, if necessary. During recording, a recording head 205 moves relatively and parallel to the turntable 202 so that the state-changed portions are formed sequentially in the form of spiral on the master substrate. A laser beam or a bundle of electron beams may be used as the recording light 206. This recording method with use of the apparatus as shown in Fig. 2 is conventional and is not novel itself. Therefore, detailed description as to this method is omitted here. Any of methods other than the method as described above may be employed as long as a desired pattern is recorded by using the state change of the thermosensitive material layer 103 due to the temperature rising.

Figs. 1B to 1D show how cross-sectional shapes of the state-changed portions 105 in the thermosensitive material layers 103 is effected by thermal conductivity of materials of the recording-auxiliary layers 102, when the thickness of the recording-auxiliary layer is constant. The recording-auxiliary layer 102 shown in Fig. 1B consists of a material having the highest thermal conductivity, and the layer 102 shown in Fig. 1D consists of a material having the lowest thermal conductivity (that is, the thermal conductivity of the layers 102 is Fig. 1B > Fig. 1C > Fig. 1D). From Figs. 1B to 1D, it is understood that the cross-sectional shape of the state-changed portion 105 is changed depending on the thermal conductivity of the material of the recording-auxiliary layer 102. In the case where only the thermal conductivity of the material of the recording-auxiliary layer is changed in the master substrate having the recording-auxiliary layer between the thermosensitive material layer and the substrate, the smaller the thermal conductivity is, the smaller the heat which is released from the substrate-side surface of the thermosensitive material layer is. In other words, as the thermal conductivity of the recording-auxiliary layer is smaller, the temperature rising occurs at a deeper position, which results in a steeper boundary between the state-changed portion and the state-unchanged portion as shown in Fig. 1D.

Figs. 1E and 1F schematically show how the cross-sectional shape of the state-changed portion 105 in the thermosensitive material layer 103 is changed depending on the thickness of the recording-auxiliary layer 102 when the recording-auxiliary layer 102 is formed from a material whose thermal conductivity is lower than that of a material of the substrate 101. In the master substrate shown in Fig. 1E, the heat release from the thermosensitive material layer 103 is more suppressed since the thickness of the recording-auxiliary layer 102 is thicker, which results in a higher inclination of boundary between the state-changed portion and the state-unchanged portion. Figs. 1G and 1H schematically show how the cross-sectional shape of the state-changed portion 105 is changed depending on the thickness of the recording-auxiliary layer 102 when the recording-auxiliary layer 102 is formed from a material whose thermal conductivity is higher than that of a material of the substrate 101. Compared with a master substrate having no recording-auxiliary layer, in the master substrate having the recording-auxiliary layer 102 whose thermal conductivity is higher than that of the substrate 101, the inclination of boundary between the state-changed portion and the state-unchanged portion becomes more gentle. Further, the thicker the recording-auxiliary layer 102 is, the gentler the inclination of the boundary is. As shown in Figs. 1E to 1H, the distribution of the state-changed portion 105 which is formed by the temperature rising upon recording can be changed by varying the thickness of the recording-auxiliary layer 102. It should be noted that Figs. 1B to 1H are the schematic views illustrating how the thermal conductivity and the thickness of the recording-auxiliary layer effect the cross-sectional shape of the state-changed portion in the thermosensitive material layer. The cross-sectional shape which is actually obtained depends on a specific thermal conductivity of the material for the substrate, the difference in thermal conductivity between the material for the substrate and the material for the recording-auxiliary layer, and the actual thickness of the recording-auxiliary layer.

After forming the state-changed portion 105, the master substrate 104 is subjected to a first etching. The first etching is carried out under a condition that the etching rate of the state-changed portion 105 is different from that of the state-unchanged portion 106. The first etching includes, for example, a dry etching such as a reactive ion etching, and a wet etching with acid or alkali. However, a method for the fist etching is not limited thereto, and any method may be employed as long as the state-changed portion 105 presents an etching rate different from that of the state-unchanged portion 106 during the first etching.

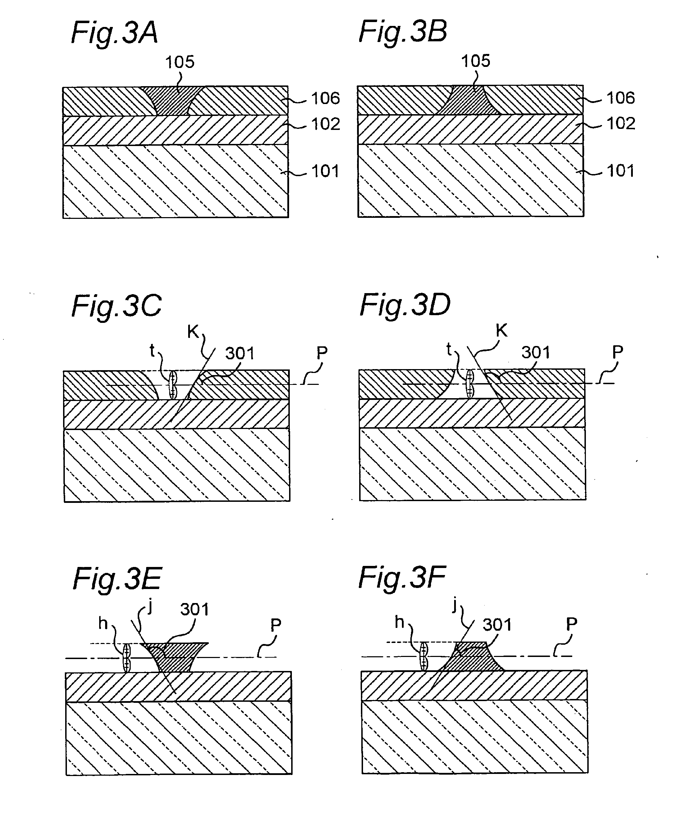

Fig. 3 shows master substrates before the etching and masters which are obtained after the etching. Figs. 3A and 3B show the master substrates before the etching. Figs. 3C and 3D show masters which are obtained by subjecting the master substrates of Figs. 3A and 3B to etching under a condition that the etching rate of the state-changed portion 105 is higher than that of the state-unchanged portion 106, respectively. In this case, the state-changed portion 105 becomes a concavity in the master. The inclination angle of this concavity is an angle denoted by the numeral 301. As described above, the inclination angle of concavity is an angle between the plane "p" parallel to the principal surface of the master and the tangent "k" to the side wall of the concavity at the half point of the depth "t" of the concavity, which angle is determined on the side of a portion that remains after the etching. Therefore, as shown in Fig. 3C, when the concavity is of funnel shape which flares toward the surface of the master, the inclination angle is an acute angle. Figs. 3E and 3F show masters which are obtained by subjecting the master substrates of Figs. 3A and 3B to etching under a condition that the etching rate of state-changed portion 105 is lower than that of the state-unchanged portion 106, respectively. In this case, the state-changed portion becomes convexity in the master. The inclination angle of this convex is an angle denoted by the numeral 302. As described above, the inclination angle of convexity is an angle between the plane "p" parallel to the principal surface of the master and the tangent "j" to the side wall of the convexity at the half point of the height "h" of the convexity, which angle is determined on the side of a portion that remains after the etching. Therefore, as shown in Fig. 3F, when the convexity is of conical shape which flares downwardly, the inclination angle is an acute angle. As shown in Fig. 3, by carrying out the etching, it is possible to obtain a master with a concavity or a convexity whose shape is the same as that of the state-changed portion 105.

The first etching is preferably carried out under a condition that the etching rate of the recording-auxiliary layer 102 is lower than the higher of the etching rates of state-changed portion 105 and state-unchanged portion 106. That is, when the state-changed portion becomes a concavity by the etching as shown in Figs. 3C and 3D, the etching rate of the recording-auxiliary layer is preferably lower than that of the state-changed portion. When the state-changed portion becomes a convexity by the etching as shown in Figs. 3E and 3F, the etching rate of the recording auxiliary layer is preferably lower than that of the state-unchanged portion. The first reason 'why it is preferable that the etching rate of the recording-auxiliary layer is lower is that the bottom surface of the concavity (which is usually a bared surface of the recording-auxiliary layer) is made flatter in the concavo-convex pattern obtained by the etching. When the bottom surface of the concavity is flattened, it is possible to obtain a signal having reduced noise upon optically reproducing a concavo-convex pattern from an optical recording medium that is produced using the master or a stamper which is obtained with use of the master. The second reason is that as the recording-auxiliary layer 102 is etched away in a smaller amount by the first etching, a concavo-convex pattern which reflects the latent-image pattern more exactly can be obtained by the etching. This makes it possible to control the cross-sectional shape of the concavo-convex pattern more effectively according to. the present invention. Therefore, in the first etching, the etching rate of the recording-auxiliary layer is preferably lower than both of the etching rates of the state-changed portion and the state-unchanged portion (that is, the lowest among the etching rates), and may be zero. Fig. 3 shown as Embodiment 1 is an example wherein the etching rate of the recording-auxiliary layer 102 is substantially zero, however the present invention includes an embodiment wherein the recording-auxiliary layer 102 presents the etching rate above zero during the first etching.

As described above, the method of the present invention makes it possible to control the cross-sectional shape of the concavo-convex pattern which is finally formed on the master, by selecting the thermal conductivity and the thickness of the recording-auxiliary layer. The inclination angle can be employed as a parameter which represents the cross-sectional shape. As described above, the pattern is formed by recording (which is merely referred to as a "recorded pattern") as concavities or convexities. In any case, when the inclination angle is 90°, it is possible to form a finer recorded pattern more stably, and to make better the signal property from the optical information recording medium that is produced with the master. When the stamper is produced with use of the master, the inclination angle is preferably below 90° on the condition that it is more than zero, and more preferable in a range of 50° to 73°. When the inclination angle is below 90°, there is an advantage that it is possible to easily transfer the concavo-convex pattern from the master to the stamper, and from the stamper to the resin substrate. However, it should be noted that the mentioned range is general, and an appropriate inclination angle depends on the steps which are carried out using the master and a method for using an optical information recording medium that is to be finally, obtained. The method of the present invention enables the inclination angle to be easily controlled by the recording-auxiliary layer without changing the thermosensitive material, whatever the desired value of the inclination angle is. This is advantageous since the alternative of a certain thermosensitive material can be selected from a narrow range of choice. Further, the method of the present invention makes it possible to obtain a concavity or a convexity whose inclination angle is larger than that obtained by the conventional heat-mode recording.

Embodiment 1 also makes it possible to improve the recording sensitivity of the thermosensitive material layer 103, whereby various master constructions can be realized. For example, when the thermal conductivity of the recording-auxiliary layer 102 is lower than that of the substrate 101, the recording-auxiliary layer 102 not only changes the cross-sectional shape of the state-changed portion 105, but also improves the recording sensitivity. More specifically, by providing the recording-auxiliary layer under and preferably in contact with the thermosensitive material layer, it is possible to dispose, under the thermosensitive material layer, a layer which serves to increase the absorbance of the thermosensitive material layer at the wavelength of light which is used for exposure. For example, such optical effect can be achieved by using a silicon substrate as the substrate 101. Since the silicon substrate has thermal conductivity higher than that of a general glass or a resin substrate by two orders of magnitude, it is difficult to carry out the heat-mode recording on a master wherein the thermosensitive material layer contacts the silicon substrate. In the method of the present invention, it is possible to produce a master substrate wherein the substrate is the silicon substrate, by forming the recording-auxiliary layer from a material of low thermal conductivity. The silicon substrate is preferably used since it is clean. Another substrate of high thermal conductivity other than the silicon substrate can be used if necessary. Alternatively, as shown in Fig. 1I, the recording sensitivity of the thermosensitive material layer can be increased by providing a metal reflective layer 107 whose thermal conductivity is very high between the substrate 101 and the recording-auxiliary layer 102. The metal reflective layer 107 is formed from, for example, at least one element selected from the group consisting of Au, Ag, Al, Cu, Pt, Pd, Cr and Ni, or a material selected from mixtures thereof and compounds thereof.

The absorbance of the thermosensitive material layer 103 can be increased by appropriately selecting the optical constant of a material and the thickness of the recording-auxiliary layer 102. The optical constant can be appropriately selected by adjusting the refractive index of the material of the recording-auxiliary layer, 102 at the wavelength of the light which is used for recording. The appropriate optical constant of the recording-auxiliary layer is determined in consideration of the optical effect (for example, reflection and interference) given by the substrate 101, the recording-auxiliary layer 102 and the thermosensitive material layer 103. Further, also the absorbance of the thermosensitive material layer 103 can be controlled in the thickness direction and thereby of the cross-sectional shape of the concavo-convex pattern formed on the master can be controlled, by constructing the master substrate so that the combination of the optical constants of the layers which constitute the master substrate in consideration of the optical effect of each layer.

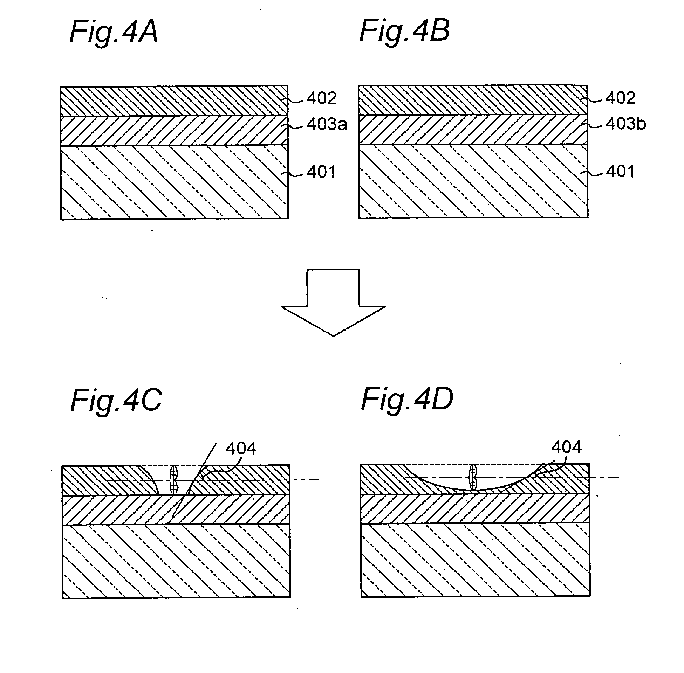

A specific example of the method for controlling the cross-sectional shape of a concavo-convex pattern on a master in accordance with the present invention, is described with reference to Fig. 4. Figs. 4A and 4B show master substrates before exposure. Herein, a soda glass substrate was used as a substrate 401. The materials for the substrate 401 other than soda glass include, for example, silica glass, silicon, a polycarbonate resin, an acrylic resin, and an olefin resin. Any of the materials can be used for forming the substrate 401 as long as it can be formed into a flat plate. The thickness of the substrate 401 was 6.0 mm. The thickness of the substrate 401 is not limited thereto, and is selected from a range of 0.4 to 10.0 mm. Since the optical effect given by a recording-auxiliary layer 403 is changed depending on the optical constant of the substrate, it may be preferable that the thickness of the recording-auxiliary layer is changed from the value indicated below, in consideration of the optical constant of the substrate.

The thermosensitive material layer 402 was formed from a material represented by TeO_{1.0}Pd_{3.0} through a sputtering method. The thickness of the thermosensitive material layer 402 was 45 nm. Sb, Se, Sn, Ge, Mo, W or Ti can be used instead of Te. Further, another metal element, for example a noble metal such as Au, Ag, Cu or Pd can be used instead of Pd. By forming the thermosensitive material layer from a material containing such a noble metal, it is possible to increase the ratio of residual film (the ratio of the thickness of the unexposed portion (that is, the state-unchanged portion) before the etching to the thickness thereof after the etching when the state-changed portion becomes a concavity). A material which is suitable for forming the thermosensitive material layer 402 is represented by a general formula M¹_{X}OM²_{Y} wherein M¹ is at least one or metal selected from the group consisting of Te, Sb, Se, Sn, Ge, Mo, W and Ti, M² is a metal element other than M¹ and preferably at least one element selected from the group consisting of Au, Ag, Cu and Pd, and 0.3 < X < 1.7 and 0.05 < Y < 0.52. However, the material for the thermosensitive material layer 402 may be formed from a material which is not represented by this formula. The thickness of the thermosensitive material layer 402 may be changed depending on the concavo-convex pattern which is to be formed on the master.

In the master substrate shown in Fig. 4A, a recording-auxiliary layer 403a was formed by sputtering into a layer of 45 nm thickness containing ZnS and SiO₂ at a molar ratio of 4:1. In the master substrate shown in Fig. 4B, a recording-auxiliary layer 403b was formed into a layer of 45 nm thickness consisting of SiO₂. The thickness of each of the recording-auxiliary layers 403a and 403b is not limited to 45 nm, and is preferably selected depending on the material and the thickness of the thermosensitive material layer 402 so that the absorbance of the layer 402 is maximum at the wavelength of light which is employed for recording. For example, when the thermosensitive material layer 402a is formed into a 60 nm thickness without changing the material therefor, the recording sensitivity of the layer 402a became maximum by forming the layer 403a into a 35 nm thickness.

These two master substrates were subjected to exposure using a laser beam having a wavelength of 405 nm and an objective lens having a NA of 0.9, so that a pattern corresponding to a pit sequence and a guide groove were formed as state-changed portions. Next, a wet etching was carried out for 60 seconds with a 1.7% TMAH (tetramethyl ammonium hydroxide). As a result, masters as shown in Figs. 4C and 4D were obtained from the master substrates shown in Figs. 4A and 4B respectively. The etchant used here is merely an example, and the concentration of TMAH can be selected form a range of 1.0% to 2.4%. Alternatively, an alkali aqueous solution such as a KOH or a NaOH aqueous solution may be used instead of TMAH, as a etchant for carrying out the etching similarly. By the etching, the state-changed portions were etched away to form concavities, and a round pit of a 90 nm diameter and a guide groove of a 70 nm width were formed on the master stably. The formation of the concavities means that a resolution sufficient to produce an optical information recording medium with a diameter of 12 cm and a recording capacity per layer of 25GB was achieved.

The inclination angle 404 of the concavity were 73° on the master shown in Fig. 4C, and 28 ° on the master shown in Fig. 4D. The recording sensitivity of the master substrate shown in Fig. 4A was twice that of the master substrate shown in Fig. 4B. From these, it is found that the inclination angle 404 of the concavity on the master substrate can be controlled as desired, for example within a range of 28° to 73°, and the recording sensitivity can be controlled within a range of a certain value to twice the certain value, by using the master substrate having the recording-auxiliary layer 430 and changing the composition ratio of the materials of the layer 403 in accordance with the present invention. Further, the method of the present invention can realize an inclination angle higher than 50° which is difficult to be realized by the prior art method wherein the heat-recording is conducted on a master substrate in which only the thermosensitive material layer is disposed on the substrate of silica glass or soda glass.

The method of the present invention is described above with reference to examples wherein the recording-auxiliary layers were formed from materials whose ratio of ZnS to SiO₂ were different from each other. A material for the recording-auxiliary layer is not limited thereto. The recording-auxiliary layer may be formed from at least one material which is selected from the group consisting of a selenide such as ZnSe, an oxide such as Si-O, Ge-O, Al-O, Zn-O, Y-O, La-O, Ti-O, Zr-O, Hf-O, Nb-O, Ta-O, Cr-O, Mo-O, W-O, Sn-O, In-O, Sb-O, and Bi-O, an nitride such as Si-N, Ge-N, Al-N, Zn-N, Ti-N, Zr-N, Hf-N, Nb-N, Ta-N, Cr-N, Mo-N, W-N, Sn-N and In-N, a nitride oxide such as Si-O-N, Ge-O-N, Al-O-N, Ti-O-N, Zr-O-N, Hf-O-N, Nb-O-N, Ta-O-N, Cr-O-N, Mo-O-N, W-O-N, Sn-O-N and In-O-N, a carbide such as Ge-C, Cr-C, Si-C, Al-C, Ti-C, Zr-C and Ta-C, a fluoride such as Si-F, Al-F, Mg-F, Ca-F and LaF, and above-mentioned ZnS and SiO₂, and mixtures thereof, by a sputtering method or a vapor deposition method.

Alternatively, the recording-auxiliary layer may be formed from an organic material such as an acrylic resin, an epoxy resin or mixture thereof. The recording-auxiliary layer formed from a resin material may be formed by, for example a spin coat method. Further, also when the resin material is employed, the thermal conductivity and the optical constant of the recording-auxiliary layer can be controlled by selecting the mixture ratio or the composition ratio of the resin material, so that the cross-sectional shape of the concavo-convex pattern is controlled. Of course, a method other than the methods described above may be employed for selecting at least one of the thermal conductivity or the optical constant of the recording-auxiliary layer, so as to control the cross-sectional shape (specifically, the inclination angle) of the concavo-convex pattern on the master.

### (Embodiment 2)

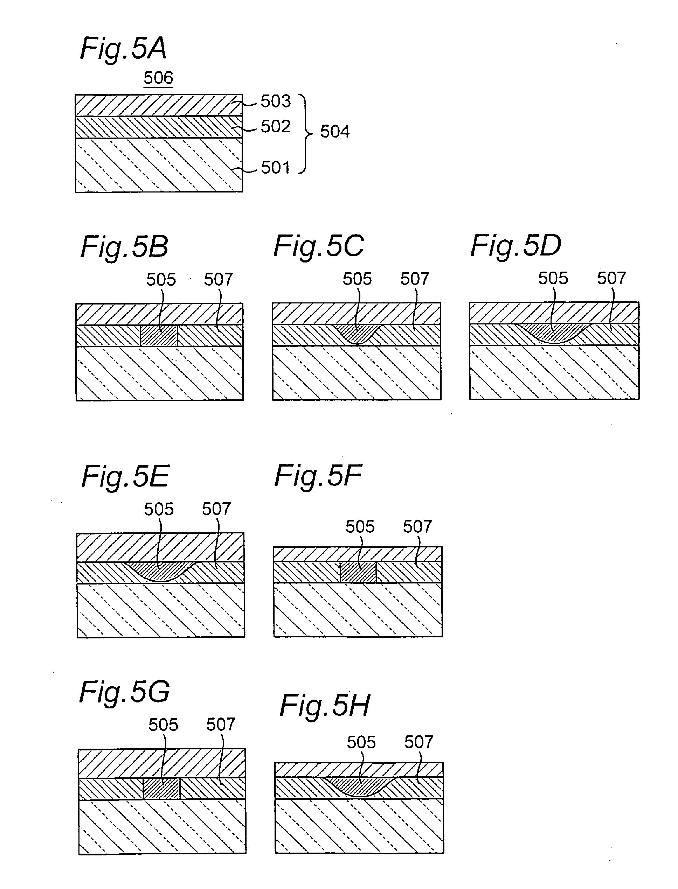

As Embodiment 2, a method for producing a master which employs a master substrate having a recording-auxiliary layer formed on the upper surface (that is, the surface further from the substrate) of the thermosensitive material layer, is described with reference to Fig. 5. Fig. 5A shows an example of a master substrate. A master substrate 504 is produced by forming a thermosensitive material layer 502 on a substrate 501 and forming a recording-auxiliary layer 503 on the thermosensitive material layer 502. In Fig. 5A, the numeral 506 refers to a surrounding medium (that is, an atmosphere upon exposure), which is generally air. The materials of the substrate 501 and the thermosensitive material layer 502 and the method for forming the layer 502 are as described in connection with Embodiment 1. The recording-auxiliary layer 503 may be a film which is formed by employing the material and the method which are as described in connection with Embodiment 1. Alternatively, the recording-auxiliary layer 503 may be liquid. Specifically, Embodiment 2 can be carried out by performing the exposure under a condition that a liquid which is to be the recording-auxiliary layer 503 is placed on (for, example, applied to) the thermosensitive material layer, or under a condition that the master substrate is immersed in the liquid. The illustrated master substrate is a minimum construction which is necessary to carry out the production method of Embodiment 2. Therefore, the master substrate may includes another element, for example, an interface layer as described above or a reflective layer, as long as the thermosensitive material layer is positioned between the recording-auxiliary layer and the substrate.

Each of Figs. 5B to 5H shows the master substrate wherein a state-changed portion 505 in the thermosensitive material layer 502 is formed by the temperature rising caused by irradiating the master substrate with light. In these figures, a state-unchanged portion is denoted by the numeral 507. A method for recording on the master substrate is described in connection with Embodiment 1, and therefore the detailed description thereof is omitted. Figs. 5B to 5D show how cross-sectional shapes of the state-changed portions 505 in the thermosensitive material layers 502 is effected by the thermal conductivity of the material of the recording-auxiliary layer 503, when the thickness of the layer 503 is constant. The recording auxiliary layer 503 shown in Fig. 5B consists of a material having the highest thermal conductivity, and the recording-auxiliary layer 503 shown in Fig. 5D consists of a material having the lowest thermal conductivity (that is, the thermal conductivity of the layers 503 is Fig. 5B > Fig. 5C > Fig. 5D). From Figs. 5B to 5D, it is understood that the cross-sectional shape of the state-changed portion 505 is changed depending on the thermal conductivity of the material of the recording-auxiliary layer 503. In the case where only the thermal conductivity of the material of the recording-auxiliary layer is changed in the master substrate having the recording-auxiliary layer disposed above the thermosensitive material layer, as the thermal conductivity is smaller, the heat tends to accumulate around the surface of the thermosensitive material layer. In other words, as the thermal conductivity of the recording-auxiliary layer is smaller, the temperature rising is difficult to occur at a deeper position, which results in a gentler sleep of boundary between the state-changed portion and the state-unchanged portion.

Figs. 5E and 5F schematically show how the cross-sectional shape of the state-changed portion 505 in the thermosensitive material layer 502 is changed depending on the thickness of the recording-auxiliary layer 503 when the recording-auxiliary layer 503 is formed from a material whose thermal conductivity is lower than that of the surrounding medium 506. In the master substrate shown in Fig. 5E, the heat release from the thermosensitive material layer 502 is more suppressed, since the thickness of the recording-auxiliary layer 503 is thicker which results in a lower (gentler) inclination of boundary between the state-changed portion and the state-unchanged portion. Figs. 5G and 5H schematically show how the cross-sectional shape of the state-changed portion 505 is changed depending on the thickness of the recording-auxiliary layer 503 when the recording-auxiliary layer 503 is formed from a material whose thermal conductivity is higher than that of the surrounding medium 506. Compared with a master substrate having no recording-auxiliary layer, in the master substrate having the recording-auxiliary layer 503 whose thermal conductivity is higher than that of the surrounding medium 506, the inclination of boundary between the state-changed portion and the state-unchanged portion becomes steeper. Further, the thicker the recording-auxiliary layer 503 is, the steeper the inclination of the boundary is. The surrounding medium 506 is generally air whose thermal conductivity is much lower than that of solid or liquid. In that case, it is difficult to make the thermal conductivity of the recording-auxiliary layer 503 smaller than that of the surrounding medium, and therefore the control of the cross-sectional shape of the state-changed portion can be realized as shown in Figs. 5G and 5H. However, when a liquid is used as the surrounding medium 506 during the recording according to, for example, a LIL (liquid immersion lens) method, the control of the state-changed portion 505 can be realized as shown in any of Figs. 5E to 5H. As shown in Figs. 5E to 5H, also when the recording-auxiliary layer is formed above the thermosensitive material layer, the distribution of the state-changed portion 505 which is formed by the temperature rising upon recording can be changed by varying the thickness of the recording-auxiliary layer 503. It should be noted that Figs. 5B to 5H are the schematic views illustrating how the thermal conductivity and the thickness of the recording-auxiliary layer effect the cross-sectional shape of the state-changed portion in the thermosensitive material layer. The cross-sectional shape which is actually obtained depends on a specific thermal conductivity of the surrounding medium, the difference in thermal conductivity between the surrounding medium and the material for the recording-auxiliary layer, and the actual thickness of the recording-auxiliary layer.

Next, a treatment for removing the recording-auxiliary layer 503 from the master substrate 504 after the recording is carried out. The removal of the recording-auxiliary layer 503 is preferably carried out so that the removal gives small effect on the thermosensitive material layer 502. In the case where a main component of the recording-auxiliary layer 503 is an organic material such as a novolak resin, an acrylic resin or a polycarbonate resin and a main component of the thermosensitive material layer 502 is an inorganic material, for example a compound of Te, Sb, Se, Sn, Ge or Mo, a wet etching with an organic solvent or a plasma etching with oxygen or a rare gas may be preferably carried out. In these etching, the etching rate of the recording-auxiliary layer 503 is sufficiently higher than that of the thermosensitive material layer 502, so that only the recording-auxiliary layer 503 is effectively removed. Further, when the material of the thermosensitive material layer 502 is not soluble in water and the recording-auxiliary layer 503 is formed from a water-soluble material such as a polyvinyl alcohol, a polyethylene oxide or a sodium polyacrylate, only the layer 503 can be removed easily. Further, when the material of the thermosensitive material layer 502 is not soluble in alkali and the recording-auxiliary layer 503 is formed from an alkali-soluble material such as a novolak or an acrylic resin, only the layer 503 can be removed easily. Furthermore, when the thermosensitive material layer 502 is not soluble in acid and the recording-auxiliary layer 503 is formed from an acid-soluble material, only the layer 503 can be removed easily.

Next, a first etching is carried out under a condition that the rate of the state-changed portion 505 is different from the rate of the state-unchanged portion 507. Examples of the first etching are as described in connection with Embodiment 1, and therefore the detailed description thereof is omitted. Also in Embodiment 2, the first etching is preferably carried out under a condition that the etching rate of the substrate 501 is lower than the higher of the etching rates of the state-changed portion 505 and the state-unchanged portion 507. The reason therefor is as described above, and therefore the detailed description is omitted. By the first etching, the state-changed portion 505 which is formed by the temperature rising upon recording becomes a concavity or a convexity.

In the above, the embodiment wherein the removal of the recording-auxiliary layer 503 and the etching of the thermosensitive material layer 502 are carried out in separate steps. Alternatively, the removal of the recording-auxiliary layer 503 and the etching of thermosensitive material layer 502 can be carried out at the same time. In that case, the number of the steps can be reduced, whereby the possibility of contamination and the production cost are reduced. Specifically, the removal of recording-auxiliary layer 503 and the etching of the thermosensitive material layer 502 can be carried out at the same time by an alkali etching, when the thermosensitive material layer 502 is formed from a compound of Te or Sb and the state-changed portion 505 has an alkali etching rate different from that of the state-unchanged portion 507 and the recording-auxiliary layer 503 is formed from an alkali-soluble material such as a novolak resin or an acrylic resin. When the etching of the thermosensitive material layer 502 is carried out with acid, an acid-soluble material is suitable for forming the recording-auxiliary layer 503 which is to be removed upon the etching of the thermosensitive material layer 502. When the thermosensitive material layer 502 is etched with an aqueous solution, and the recording-auxiliary layer 503 is formed from an water-soluble material such as a polyvinyl alcohol, a polyethylene oxide, or a sodium polyacrylate, the removal of the layer 503 and the etching of the layer 502 can be carried out in single step. There are other various methods. In any of the methods, the recording-auxiliary layer 503 can be removed effectively by carrying out the etching under a condition that the etching rate of the recording-auxiliary layer 503 is higher than that of the thermosensitive material layer 502. Further, when the removal of the recording-auxiliary layer 503 and the etching of the thermosensitive material layer 502 are carried out at the same time, the etching rate of the recording-auxiliary layer 503 is preferably higher than the lower of the etching rates of the state-changed portion 505 and the state-unchanged portion 507, whereby the roughening of the surface of the portion that remains after the etching (that is, the state-changed portion 505 or the state-unchanged portion 507, whichever is lower in the etching rate) can be suppressed.

The method according to Embodiment 2 makes it possible to control the cross-sectional shape of the concavo-convex pattern on the master easily without changing the material of the thermosensitive material layer.

### (Embodiment 3)

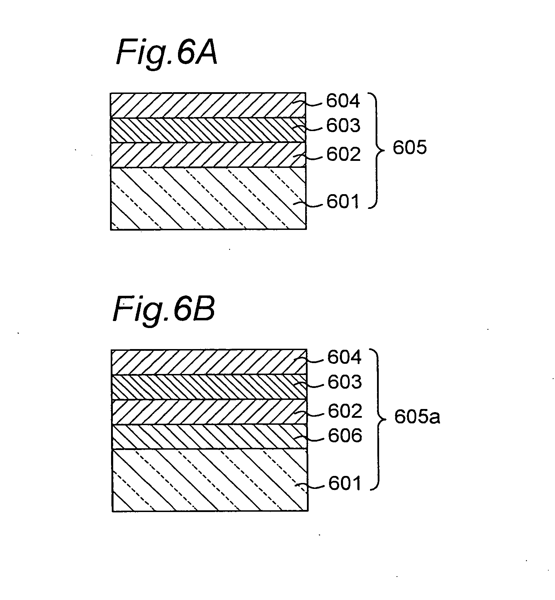

As Embodiment 3, a method for producing a master which employs a master substrate having two recording-auxiliary layers which sandwich a thermosensitive material layer, is described with reference to Fig. 6. Fig. 6A shows an example of a master substrate. A master substrate 605 is produced by forming a fist recording-auxiliary layer 602 on a substrate 601, forming a thermosensitive material layer 603 on the first recording-auxiliary layer 602, and forming a second recording-auxiliary layer 604 on the thermosensitive material layer 603. The materials of the substrate 601 and the thermosensitive material layer 603 and the method for forming the layer 603 are as described in connection with Embodiment 1. The materials of the fist and the second recording-auxiliary layers 602 and 604 and the methods for forming those layers are as described in connection with Embodiment 1. The second recording-auxiliary layer 604 may be a liquid, as described in connection with Embodiment 2. In that case, the liquid has to be supplied by application or immersion upon recording. The illustrated master substrate is a minimum construction which is necessary to carry out the production method of Embodiment 3. Therefore, the master substrate may includes another element, for example, an interface layer between the recording-auxiliary layer and the thermosensitive material layer, or a reflective layer, as long as the thermosensitive material layer is positioned between the two recording-auxiliary layers.

For example, as shown in Fig. 6B, a metal reflective layer 606 may be provided between the substrate 601 and the first recording-auxiliary layer 602. The material of the metal reflective layer 606 and the method for forming the layer 606 are as described in connection with Embodiment 1. Also in this embodiment, an optical effect of the metal reflective layer 606 can be obtained while adverse effect caused by the layer 606 can be reduced by the recording-auxiliary layer 602, as described in connection with

### Embodiment 1.

A desired pattern is recorded on each of the master substrates 605 and 605a shown in Figs. 6A and 6B respectively. The recording method is the same as that in Embodiment 1. Next, the second recording-auxiliary layer 604 is removed, and then the fist etching is carried out so as to form a master having a concavo-convex pattern. The removal of the second recording-auxiliary layer 604 and the first etching can be performed at the same time. The method for removing the second recording-auxiliary layer 604 and the method of the first etching are as described in connection with Embodiment 3, and therefore the detailed description thereof is omitted.

In the master substrate 605, the first recording-auxiliary layer 602 performs in the same manner as the recording-auxiliary layer 102 mentioned in Embodiment 1, and the recording-auxiliary layer 604 performs in the same manner as the recording-auxiliary layer 503 mentioned in Embodiment 2. Therefore, the advantages which are given by Embodiments 1 and 2 can be obtained simultaneously in the master substrate 605, whereby the cross-sectional shape of the concavo-convex pattern and the recording sensitivity can be controlled more freely compared with the master substrate having only one recording-auxiliary layer.

### (Embodiment 4)

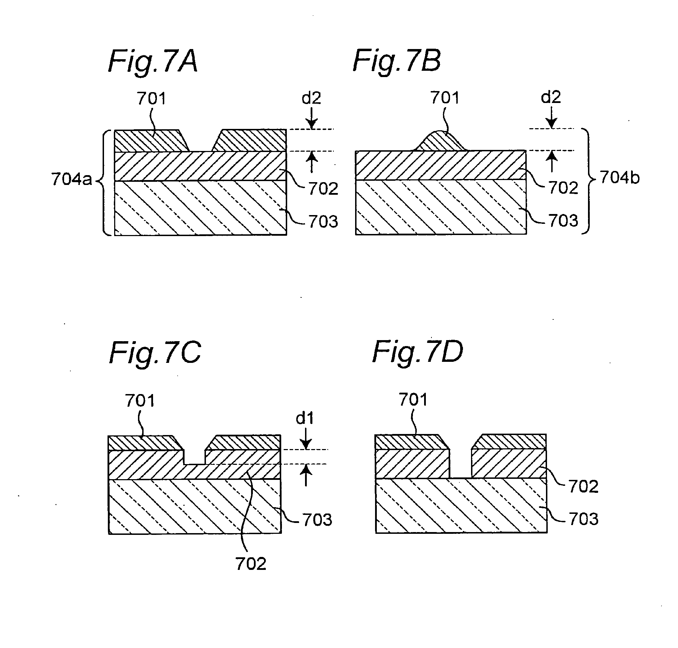

As Embodiment 4, a method wherein the a second etching is further carried out after a first etching has been carried out for forming concavities and convexities on a thermosensitive material layer. In Embodiment 4, the master substrate employed in Embodiment 1 or 3 is used and a concavo-convex pattern is formed on the thermosensitive material layer in the same manner as in Embodiment 1 or 3. In Fig. 7A, a master substrate 704a is shown in cross-sectional view, wherein a state-changed portion in a thermosensitive material layer 701 formed by the temperature rising upon recording is made into a concavity. In Fig. 7B, a master substrate 704b is shown in cross-sectional view, wherein a state-changed portion in a thermosensitive material layer 701 formed by the temperature rising upon recording is made into a convexity. In both of the master substrates, the thermosensitive material layer is formed above a recording-auxiliary layer 702. A layer 703 in contact with the lower surface of the recording-auxiliary layer 702 is generally a substrate or a metal reflective layer as described in connection with Embodiments 1 to 3, however the layer 703 is not limited thereto. In the following, Embodiment 4 wherein the master substrate having a recorded pattern with concavities formed by etching away the state-changed portion as shown in Fig. 7A, is exemplified.

In Embodiment 4, a master substrate is subjected to the first etching, and then subjected to the second etching using the thermosensitive material layer 701 as a mask. In the second etching, a portion which remains in the thermosensitive material layer after the first etching functions as a mask, while a portion of the recording-auxiliary layer which portion is bared by the first etching is etched so as to form a concavity. The second etching may be a reactive ion etching, a plasma etching, or a wet etching with acid or alkali. When the thermosensitive material layer 701 is formed from an inorganic material such as a compound of Te, Sb, Se, Sn, Ge or Mo and the recording-auxiliary layer 702 is formed from an organic material such as a novolak resin, an acrylic resin or a polycarbonate resin, the plasma etching or the wet etching with an organic solvent may be preferably carried out as the second etching because of ease of operation. Alternatively, it is preferable that the recording-auxiliary layer 702 is formed from SiO₂ while the second etching is carried out to remove SiO₂ selectively with a fluorine-containing gas or liquid.

Fig. 7C shows a master substrate after the second etching. In Fig. 7C, "d1" corresponds to a depth which is given by etching the recording-auxiliary layer 702. The second etching may be preferably carried out under a condition that the mask does not disappear. When the mask disappears, there is a disadvantage that a portion of the recording-auxiliary layer 702 which should be masked is etched away, whereby a desired concavo-convex pattern fails to be formed. Therefore, the second etching is preferably carried out under a condition that the etching selective ratio of the recording-auxiliary layer 702 to the thermosensitive material layer 701 is d1/d2 or more wherein d2 is an average thickness of the thermosensitive material layer 701 before the second etching (see Fig. 7A). When the master substrate shown in Fig. 7B is subjected to the second etching, the convexities function as a mask and concavities are formed on the recording-auxiliary layer 702 (not shown).

Further, as shown in Fig. 7D, when the second etching is carried out so that the surface of the lower layer 703 is bared, it is preferable that the etching selective ratio of the recording-auxiliary layer 702 to the lower layer 703 is larger than 1. By selecting such an etching selective ratio, the surface of the lower layer 703 which is bared by the second etching is less roughened during the second etching, whereby an excellent pattern with a bottom surface flattened can be obtained. For example, when the recording-auxiliary layer 702 contains SiO₂ and the lower layer 703 consists of Si, a reactive ion etching with a fluorine-containing material such as a fluorocarbon may be carried as the second etching. In that case, even if the surface of the lower layer 703 is bared during the second etching, the roughening of the surface can be suppressed. When the recording-auxiliary layer 702 is formed from an organic material such as a novolak resin, an acrylic resin or a polycarbonate resin, and the lower layer 703 is formed from an inorganic material such as glass or silicon and the surface of layer 703 may be bared, the plasma etching or the wet etching with an organic solvent may be preferably carried out as the second etching. When the lower layer 703 is the above-mentioned metal reflective layer, it is easy to select a larger etching selective ratio of the recording-auxiliary layer 702 to the lower layer 703. Therefore, the master substrate having the metal reflective layer as the lower layer 703 is preferably employed in

### Embodiment 4.

Next, the third etching is carried out to remove the thermosensitive material layer 701 which has been used as the mask, resulting in a master. The examples of the third etching include a dry etching such as a reactive ion etching and a plasma etching, and a wet etching with acid or alkali. The third etching is preferably carried out under a condition that the etching selective ratio of the thermosensitive material layer 701 to the recording-auxiliary layer 702 is larger than 1. By selecting such an etching selective ratio in this manner, the recording-auxiliary layer 702 is less etched during the third etching, whereby an excellent pattern is formed on the master. When the lower layer 703 is bared by the second etching, or when the lower layer 703 is bared by the third etching, the third etching is more preferably carried out under a condition that also the etching selective ratio of the thermosensitive material layer 701 to the lower layer 703 is larger than 1. This is because that the lower layer 703 is less etched during the third etching so as to give an excellent pattern on the master. In an exemplary embodiment, the thermosensitive material layer 701 is formed from an oxide of Te, the recording-auxiliary layer 702 is formed from SiO₂, the lower layer 703 is formed from Si, and an etching with alkali such as TMAH or KOH is carried out as the third etching. According to this exemplary embodiment, the thermosensitive material layer 701 can be removed by the third etching without substantially damaging the recording-auxiliary layer 702 and the lower layer 703.

Embodiment 4 makes it possible to bare a flat surface of the recording-auxiliary layer by removing the thermosensitive material layer, which results in an excellent concavo-convex pattern on the recording-auxiliary layer. Therefore, the method of Embodiment 4 is particularly useful when an excellent concavo-convex pattern is difficult to be obtained due to roughening of the surface of the thermosensitive material layer or scam formation during the first etching according to Embodiment 1 or 3. Further, the method of Embodiment 4 is preferably employed when the material contained in the thermosensitive material layer causes a problem in another step (for example, plating) after the master is produced according to Embodiment 1 or 3. As described above, the method of Embodiment 4 makes it possible to select a thermosensitive material from a wider range when producing a master with the heat-mode recording.

### (Embodiment 5)

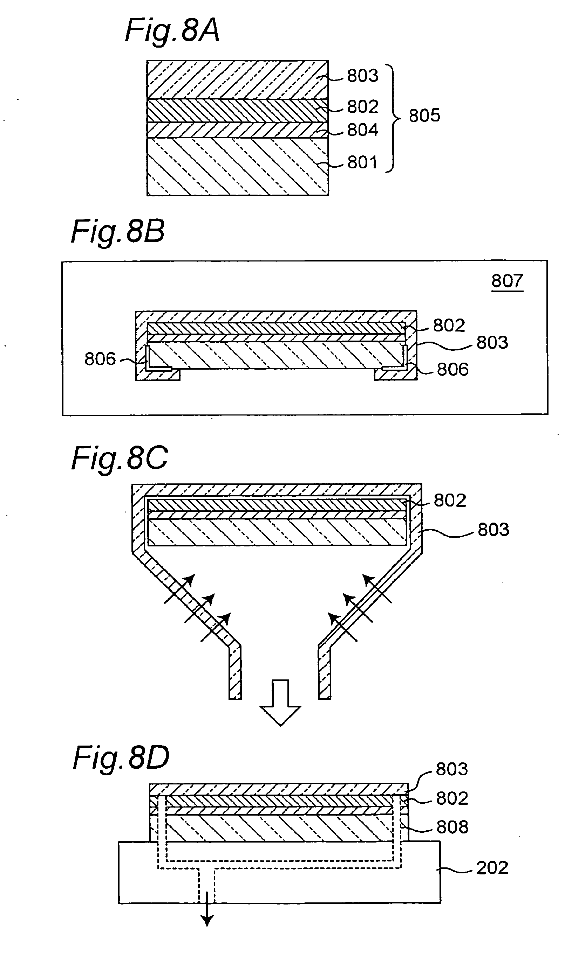

As Embodiment 5, a method wherein a master substrate having a light permeable layer above a thermosensitive material layer is employed. In Fig. 8A, a master substrate employed in Embodiment 5 is shown in cross-sectional view. A master substrate 805 is obtained by forming a recording-auxiliary layer 804 on a substrate 801, forming a thermosensitive material layer 802 on the recording-auxiliary layer 804 and forming a light permeable layer 803 on the thermosensitive material layer 802. The material of the substrate 801, the materials of thermosensitive material layer 802 and the recording-auxiliary layer 804 and the method for forming those layers are as described in connection with Embodiment 1. Materials of the light permeable layer 803 and a method for forming the layer 803 are described in the following. The illustrated master substrate 804 is an example of a minimum construction which is necessary to carry out the production method of Embodiment 5. Therefore, the master substrate may includes another element, for example, an interface layer or a reflective layer, as long as the light permeable layer is formed as the top layer. Alternatively, instead of or together with the recording-auxiliary layer 804, a recording-auxiliary layer may be formed on the thermosensitive material layer. In that case, the light permeable layer is formed on the recording-auxiliary layer.

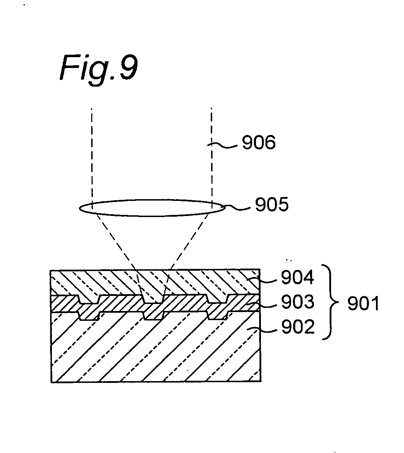

Before describing the material for the light permeable layer and the method for forming the layer, the advantage given by the light permeable layer is explained with reference to Fig. 9. Fig. 9 shows a construction of a conventional organic information recording medium 901. The optical information recording medium 901 shown in Fig. 9 includes a substrate 902 on which a concave-convex pattern on a master is transferred directly or indirectly, at least one signal layer 903 formed on the substrate 902, and a transparent protective layer 904 formed on the signal layer 903. For example, in an overwritable or a write-once type medium, the signal layer 903 includes a layer of calcogenide or pigment, and optionally a reflective layer of metal or silicon to improve the recording-reproducing properties. In the read-only medium, the concavities and convexities gives a signal information, and the signal layer 903 is a reflective layer which gives, as the signal information, a phase difference of a reflected light. In any embodiment of the optical information recording mediums 901, reproducing and recording are carried out using a light 906 (such as a laser beam) which is focused by an objective lens 905.

The objective lens 905 with which information is recorded on or reproduced from the optical information recording medium, is supplied at a relatively low cost, since DVD, CD and so on widely spread. Therefore, if this objective lens 905 is used for the exposure in the master production process, the cost for the master production can be reduced. However, master recording cannot be carried out using the objective lens employed for record and reproduction of information on the optical information recording medium, in view of the effect of spherical aberration. The effect of spherical aberration is caused by the fact that, in the prior art master recording, the layer on which the recording light is to be focused is disposed on the surface of the master substrate, and the master substrate is covered with a layer that is very different optically from the protective layer 904 in the optical information recording medium 901. For this reason, the master recording requires an expensive objective lens which is produced only for master recording.

According to the method of the present invention, since the heat-mode recording can be carried out on a master substrate including a thermosensitive material, the master recording can be carried out with light and a NA of an object lens, which light and NA are generally used for record and reproduction of information on an optical information recording medium. That is, the method of the present invention facilitates the objective lens employed in a household apparatus to be used for the master recording. However, such an objective lens is difficult to be used because of the effect of spherical aberration. The inventors of the present invention has considered that such an objective lens can be used by forming the master itself into the same construction as that of the optical information recording medium. This is the reason why the light permeable layer 803 is provided. That is, the advantage of Embodiment 5 is that an inexpensive objective lens which is mounted on a drive of a household apparatus can be used as an objective lens for the master recording.

Therefore, the light permeable layer 803 is formed into a layer whose optical constant and thickness are similar to those of the protective layer 904 of the optical information recording medium. The protective layer 904 is generally formed from a resin such as a polycarbonate resin. The protective layer 904 has an refractive index in a range of 1.4 to 1.6 at around the wavelength of 405nm which is to be used for record and reproduction of information on the next-generation optical information recording medium. Therefore, the light permeable layer 803 is also preferably formed from a material whose refractive index is in the range similar to the above-mentioned range, for example in a range of 1.35 to 1.65, at a wavelength of around 405nm. Specifically, materials for the light permeable layer 803 include a polycarbonate resin, an acrylic resin, silica glass and soda glass. The material is not limited thereto and any of materials whose refractive index is in the above range may be used for forming the layer 803. The thickness of the light permeable layer 803 is selected depending on an objective lens which is employed. The spherical aberration may be preferably controlled by adjusting the thickness of the light permeable layer 803 since the thickness of the layer 803 can be more easily controlled than the refractive index of the layer 803. Further, when minor adjustment of the spherical aberration is desired, a mechanism for correcting spherical aberration may be provided between the objective lens and a light source.

The light permeable layer 803 may be formed by applying a fluid material containing a curable resin by a spin coat method, followed by curing the curable resin by evaporation of solvent or irradiation of ultraviolet rays. Alternatively, the light permeable layer 803 may be formed according to a method wherein a transparent sheet is bonded with an adhesive sheet or an adhesive. Alternatively, the light permeable layer 803 may be formed according to any one of methods shown in Figs. 8B to 8D. Fig. 8B shows a method wherein a master substrate is covered with a sheet-like material in a vacuum atmosphere 807 and the sheet-like material is bonded to the substrate 801 with an adhesive 806. Fig. 8C shows a method wherein a master substrate is wrapped with a bag-like sheet material and the bag-like sheet material is made contact with the master substrate by vacuuming followed by being sealed. Fig. 8D shows a method wherein a transparent sheet-like material is made contact with the master substrate by vacuuming through a hole 808 formed in the substrate and a turntable 202, when the master substrate is subjected to the exposure. The light permeable layer 803 is required to contact a layer beneath the layer 803 during the exposure, and does not necessarily need to contact the layer beneath the layer 803 before the exposure. The layer beneath the light permeable layer 803 is the thermosensitive material layer in Fig. 8, or a recording-auxiliary layer when the recording-auxiliary layer is formed on the thermosensitive material layer.

The method for recording on the master substrate is as described in connection with Embodiment 1. After recording, the light permeable layer 803 is removed. The light permeable layer 803 is removed with a solvent or by a plasma etching when the layer 803 is formed by curing a liquid material containing a curable resin. When the light permeable layer 803 is formed by, for example bonding a transparent sheet-like material to the thermosensitive material layer 802 with an adhesive sheet or an adhesive, an adhesive of low adhesiveness may be employed so that the sheet material can be removed by peeling. In that case, the residual adhesive can be removed with a solvent or by a plasma etching. When the light permeable layer is not fixed to the layer beneath the light permeable layer (for example, the thermosensitive material layer 802) as shown in Figs. 8B, 8C and 8D, the light permeable layer can be easily removed by peeling or releasing vacuum.

The treatment (specifically, etching) of the master substrate after the light permeable layer 803 is removed may be carried out depending on the constitution of the master substrate according to the method described in connection with Embodiments 1 to 4, whereby a master for an optical information recording medium can be obtained.

The method for producing a master of the present invention makes it possible to form a fine concavo-convex pattern with its cross-sectional shape controlled, using the heat-mode recording. Therefore, a master produced according to the method is suitable for producing an optical information recording medium which requires a fine concavo-convex pattern so that signal is recorded on and/or reproduced from the optical information recording medium using a laser beam having a short wavelength such as a blue laser beam.

## Claims

1. A method for producing a master for an optical information recording medium comprising:
exposing a master substrate comprising a substrate, a thermosensitive material layer which comprises a material whose state is changed by a temperature change due to the exposure, and a recording-auxiliary layer which comprises a material different from the material of the thermosensitive material layer, to form a state-changed portion in the thermosensitive material layer; and
carrying out a first etching under a condition that an etching rate of the state-changed portion in the thermosensitive material layer is different from an etching rate of a state-unchanged potion in the thermosensitive material layer.

2. The method according to claim 1, wherein the recording-auxiliary layer is disposed between the thermosensitive material layer and the substrate in the master substrate.

3. The method according to claim 2, wherein, in the master substrate, the material of the recording-auxiliary layer has a thermal conductivity which is different from a thermal conductivity of a material of the substrate.

4. The method according to claim 2, wherein, in the master substrate, the recording-auxiliary layer increases an absorbance of the thermosensitive material layer at a wavelength of light which is employed for the exposure.

5. The method according to claim 1, wherein the thermosensitive material layer is disposed between the recording-auxiliary layer and the substrate in the master substrate.

6. The method according to claim 5, wherein the recording-auxiliary layer is removed by the first etching.

7. The method according to claim 5 or 6, wherein, in the master substrate, the material of the recording auxiliary layer has a thermal conductivity which is different from a thermal conductivity of a medium which contacts a surface of the master substrate.

8. The method according to claim 1, wherein, in the master substrate, the recording-auxiliary layer comprises a first recording-auxiliary layer and a second recording-auxiliary layer, and the first recording-auxiliary layer is disposed between the thermosensitive material layer and the substrate, and the thermosensitive material layer is disposed between the first recording-auxiliary layer and the second recording-auxiliary layer.

9. The method according to claim 8, wherein, in the master substrate, a material of the first recording-auxiliary layer has a thermal conductivity which is different from a thermal conductivity of a material of the substrate.

10. The method according to claim 8 or 9, wherein, in the master substrate, a material of the second recording-auxiliary layer has a thermal conductivity which is different from a thermal conductivity of a medium which contacts a surface of the master substrate.

11. The method according to any one of claims 8 to 10, wherein, in the master substrate, the recording-auxiliary layer increases an absorbance of the thermosensitive material layer at a wavelength of light which is employed for the exposure.

12. The method according to any one of claims 1 to 11, wherein, in the master substrate, a metal reflective layer is disposed at a position which is closer to the substrate than both of the thermosensitive material layer and the recording-auxiliary layer.

13. The method according to claim 12, wherein, in'the master substrate, the recording-auxiliary layer is disposed between the metal reflective layer and the thermosensitive material layer, and a material of the recording-auxiliary layer has a thermal conductivity which is lower than a thermal conductivity of a material of the metal reflective layer.

14. The method according to any one of claims 1, 2, 3, 4, 8, 9, 10, 11, 12 and 13, wherein the first etching is carried out under a condition that an etching rate of the recording-auxiliary layer is lower than a highest etching rates among the state-changed portion and the state-unchanged portion in the thermosensitive material layer.

15. The method according to any one of claims 1, 2, 3, 4, 8, 9, 10, 11, 12, 13, and 14, which further comprises carrying out a second etching using the thermosensitive material layer as a mask after removing the thermosensitive material layer selectively by the first etching, and a third etching for removing the thermosensitive material layer after the second etching.

16. The method according to claim 15, wherein the master substrate has a constitution in which the recording-auxiliary layer is disposed between the thermosensitive material layer and the substrate, and the second etching is carried out under a condition that an etching selective ratio of the recording-auxiliary layer to the thermosensitive material layer is larger than d1/d2 wherein d1 is a depth of a concavity which is to be formed by the second etching and d2 is an average thickness of the thermosensitive material layer before the second etching.

17. The method according to claim 15 or 16, wherein the second etching is carried out under a condition that an etching selective ratio of the recording-auxiliary layer to a layer which contacts the recording-auxiliary layer and is disposed closer to the substrate is larger than 1.

18. The method according to any one of claims 1 to 17, wherein, in the master substrate, a light permeable layer comprising a material whose refractive index is in a range of 1.35 to 1.65 at a wavelength of light which is employed for the exposure is disposed at a position further from the substrate than both of the thermosensitive material layer and the recording-auxiliary layer, and is removed after the exposure.

19. The method according to any one of claims 1 to 18, wherein, in the master substrate, the thermosensitive material layer comprises either or both of Te and Sb, at least one element selected from the group of consisting of Au, Pt, Ag and Cu, and O atom, the recording-auxiliary layer comprises at least one of ZnS and SiO₂, the exposure is carried out with a laser beam and the first etching is an alkali etching.

20. The method according to any one of claims 1 to 19, wherein, in the master substrate, the recording-auxiliary layer comprises a resin material.

21. The method according to any one of claims 1 to 20, wherein the recording-auxiliary layer comprises an inorganic material and is formed by a vacuum deposition method or a sputtering method.

22. The method according to any one of claims 1 to 21, wherein an inclination angle of a concavity or a convexity formed on the master by the first etching is in a range of 50° to 73°.

23. A master for an optical information recording medium produced by the method according to any one of claims 1 to 22.

24. A stamper produced using a master for an optical information recording medium produced by the method according to any one of claims 1 to 22.

25. An optical information recording medium produced using a master for an optical information recording medium produced by the method according to any one of claims 1 to 22.
